# EUROPÄISCHE PATENTSCHRIFT

(11) **EP 1 211 478 B1**
(45) Veröffentlichungstag und Bekanntmachung des Hinweises auf die Patenterteilung: **18.04.2007**
(21) Anmeldenummer: 01126323.3
(22) Anmeldetag: 06.11.2001
(51) Int. Cl.: G01B 11/02, G01S 17/08, G01C 3/10, G01S 7/491, G01S 17/46

(54) **Abstandsbestimmung**
Distance determination
Détermination de distance

(30) Priorität: 29.11.2000 DE 10059156
(43) Veröffentlichungstag der Anmeldung: 05.06.2002
(60) Teilanmeldung: 06018462.9
(73) Patentinhaber: SICK AG, 79183 Waldkirch (DE)
(72) Erfinder: Waslowski, Kai, 79312 Emmendingen (DE); Merettig, Gerhard, 79350 Sexau (DE); Ringwald, Siegfried, 79215 Elzach (DE)
(74) Vertreter: Manitz, Finsterwald & Partner GbR

(56) Entgegenhaltungen:
- EP-A- 0 281 085
- WO-A-98/21550
- DE-A- 4 004 530
- DE-C- 19 732 376
- US-A- 4 825 091

## Beschreibung

Die Erfindung betrifft ein Verfahren sowie eine Vorrichtung zum Bestimmen des Objektabstands zwischen einem nach dem Triangulationsprinzip arbeitenden optoelektronischen Sensor und einem Tastobjekt.

Bei bekannten Sensoren, die nach dem Triangulationsprinzip arbeiten, wird ein ausgesandter Lichtfleck auf dem Objekt, dessen Abstand bestimmt werden soll, abgebildet und vom Objekt auf einen ortsauflösenden Empfänger abgebildet. Die Position des reflektierten und/oder remittierten Lichtflecks auf dem Empfänger ist von dem auch als Tastweite bezeichneten Abstand zwischen dem Sensor und dem Objekt abhängig. Die Lage des Schwerpunkts des Lichtflecks auf dem Empfänger kann somit als ein Maß für den zu bestimmenden Abstand verwendet werden. Hierzu ist es bekannt, den lichtempfindlichen Bereich des Empfängers in zwei Unterbereiche zu unterteilen, nämlich einen Nahbereich und einen Fernbereich. Die Verteilung der Intensität des abgebildeten Lichtflecks zwischen dem Nahbereich und dem Fembereich ist von dem Objektabstand abhängig, so daß die Differenz zwischen den Ausgangssignalen der beiden Bereiche das Maß für den Objektabstand bildet.

Nachteilig an diesen Sensoren ist, daß Störsignale, die dem eigentlichen Empfangssignal, das von dem vom Objekt reflektierten und/oder remittierten Lichtfleck stammt, überlagert sind, nicht als solche erkannt werden können. Quellen derartiger Störsignale sind beispielsweise Fehler oder Verschmutzungen der Sensoroptik, spiegelnde, glänzende oder stark kontrastbehaftete Flächen entweder auf dem Objekt, dessen Abstand bestimmt werden soll, oder auf Störobjekten, die seitlich oder hinter dem zu ertastenden Objekt angeordnet sind und auch als Hintergrundobjekte bezeichnet werden.

EP 0 281 085 A2 beschreibt einen Abstandssensor mit einer Sendeeinheit und zwei Empfangseinheiten. Aus der Phasenverschiebung der Signale an den zwei Empfangseinheiten wird der Abstand zu einer Oberfläche bestimmt.

Aus DE 40 04 530 A1 ist die Verwendung mehrer Sender bekannt. Bei der dort beschriebenen Lösung werden die Lichtstrahlen der beiden Sender auf die Oberfläche fokussiert, deren Abstand bestimmt werden soll.

Bei dem Abstandssensor der US 4,825,091 wird das Licht einer Laserdiode zur Abstandsmessung verwendet. Im Vorfeld der Abstandsmessung wird eine Positionierung des Messobjektes im Messbereich angestrebt, wobei die Lichtflecken von zusätzlichen Pilotstrahlen verwendet werden, die derart ausgestaltet sind, dass sie bei optimaler Positionierung des Messobjektes in einem gemeinsamen Lichtpunkt auf dem Objekt auftreffen.

Verfahren und Vorrichtungen zum Bestimmen des Objektstandes sind auch aus WO 98/21550 A und DE 197 32 376 C1 bekannt.

Aufgabe der Erfindung ist es, eine Möglichkeit zu schaffen, mit einem nach dem Triangulationsprinzip arbeitenden optoelektronischen Sensor den Abstand zwischen dem Sensor und einem Objekt auf möglichst einfache und zuverlässige Weise unabhängig von eventuell vorhandenen, das eigentliche Empfangssignal verfälschenden Fehlerquellen zu bestimmen.

Die Lösung dieser Aufgabe erfolgt zum einen durch die Merkmale des unabhängigen Verfahrensanspruches.

Es stehen durch den Zusatzkanal zusätzliche Informationen zur Verfügung, die durch die gemeinsame Auswertung mit den Informationen aus dem Meßkanal herangezogen werden können, um Fehlerquellen als solche zu identifizieren und so den Einfluß der Fehlerquellen auf die Abstandsmessung zu reduzieren.

Die gemeinsame Auswertung erfolgt in einer dem Sensor zugeordneten Auswerteeinheit, an welche die Empfangseinheit oder Empfangseinheiten angeschlossen sind. In Abhängigkeit von der Ausgestaltung des Verfahrens zur Abstandsbestimmung bzw. von dem Aufbau und der Betriebsweise des Sensors können jeweils geeignete mathematische Auswerteverfahren, z.B. Kreuzkorrelationen zwischen einer abgespeicherten oder eingelernten Intensitätsverteilung der Empfangssignale und einer aktuellen Intensitätsverteilung, zum Einsatz kommen.

Bevorzugt ist es, wenn der Meßkanal und der Zusatzkanal für jeden Objektabstand gemeinsam und insbesondere zumindest im wesentlichen gleichzeitig betrieben werden.

Hierunter fällt es auch, wenn die Kanäle in schneller Folge nacheinander angesteuert werden, indem z.B. mehrere Sendeeinheiten ihre Abtaststrahlen in kurzen Zeitabständen nacheinander aussenden und/oder mehrere Empfangseinheiten nacheinander ausgelesen werden, um den jeweiligen Objektabstand durch gemeinsame Auswertung der Empfangssignale zu bestimmen.

Bevorzugt ist es, wenn im Meßkanal und/oder im Zusatzkanal jeweils die Intensitätsverteilung des Empfangssignals auf der Empfangseinheit oder auf den Empfangseinheiten für die Abstandsbestimmung verwendet wird.

Als Empfangseinheiten können erfindungsgemäß ortsauflösende Detektoren von grundsätzlich beliebiger Art vorgesehen werden. Die Position eines vom Objekt reflektierten und/oder remittierten Lichtflecks und Informationen über die Umstände der Lichtfleckreflexion und/oder -remission können aus der oder den nachgewiesenen Intensitätsverteilungen abgelesen werden.

Es ist vorgesehen, daß die Abtaststrahlen des Zusatzkanals gezielt derart und insbesondere unfokussiert, gestreut, aufgeweitet und/oder diffus ausgesandt werden, daß eine räumlich ausgedehnte Abtastzone in den Meßbereich ausgesandt wird. Die Abtastzone deckt zumindest im wesentlichen den gesamten Halbraum ab.

Dann wird bei der gemeinsamen Auswertung vorzugsweise eine Differenz zwischen den Empfangssignalen des Meßkanals und des Zusatzkanals gebildet. Hierbei wird bevorzugt zunächst das Empfangssignal des Zusatzkanals vom Empfangssignal des Meßkanals abgezogen, negative Differenzwerte werden anschließend gleich Null gesetzt, und ein resultierendes positives Differenzsignal wird dann für die Abstandsbestimmung verwendet.

Mit der räumlich ausgedehnten Abtastzone kann das zu Störsignalen führende Streulicht nachgebildet werden, so daß kritische Sichtbereiche des Sensors auf das Vorhandensein von Störobjekten überwacht werden können.

Erfindungsgemäß werden mehrere Sendeeinheiten vorgesehen. Es kann auch empfangsseitig eine Unterteilung in mehrere Empfangseinheiten und/ oder Empfangsoptiken erfolgen.

Gemäß einer bevorzugten Variante der Erfindung ist hierbei die Sendeeinheit zwischen den wenigstens zwei Empfangseinheiten und/oder Empfangsoptiken angeordnet, wird für die Empfangssignale jeweils ein Schwerpunkt und der Abstand des Schwerpunkts von der Position der Sendeeinheit ermittelt, und wird der Mittelwert der Schwerpunktsabstände als Maß für den Objektabstand verwendet.

Gemäß einer alternativen Variante der Erfindung können die wenigstens zwei Empfangseinheiten und/oder Empfangsoptiken auf derselben Seite der Sendeeinheit angeordnet und der Abstand zwischen einander entsprechenden charakteristischen Bereichen der Empfangssignale des Meßkanals und des Zusatzkanals als Maß für den Objektabstand verwendet werden.

Die Verwendung mehrerer Sendeeinheiten ist insbesondere dann vorteilhaft wenn neben oder hinter dem zu ertastenden Objekt spiegelnde oder glänzende Störobjekte zu erwarten sind. Mehrere Empfangseinheiten und/oder Empfangsoptiken werden insbesondere dann eingesetzt, wenn Fehler aufgrund eines relativ stark kontrastbehafteten Tastobjekts erwartet werden.

Alle in den Ansprüchen, der Beschreibungseinleitung und der nachfolgenden Figurenbeschreibung erwähnten Varianten der Erfindung können - sofern sie einander nicht widersprechen - auch miteinander kombiniert werden, wodurch eine besonders sichere und zuverlässige Bestimmung des Objektabstands möglich ist.

Die Lösung der der Erfindung zugrundeliegenden Aufgabe erfolgt zum anderen durch die Merkmale des unabhängigen Vorrichtungsanspruchs.

Vorzugsweise sind alle Sende- und Empfangseinheiten in einer gemeinsamen Sensorebene angeordnet, die bevorzugt senkrecht zu der den kürzesten Abstand zwischen dem Sensor und dem Objekt entsprechenden Abstandsrichtung, die auch als Sende- und/oder Empfangsachse bezeichnet wird, verläuft.

Bevorzugt ist die oder jede Sendeeinheit in Form einer LED oder einer Lasereinrichtung, beispielsweise einer Laserdiode, vorgesehen. Des weiteren ist vorzugsweise die oder jede Empfangseinheit in Form eines ortsauflösenden Detektors z.B. in Form eines ein- oder mehrreihigen Fotodioden-Arrays, einer CCD (Charge Coupled Device) oder einer PSD (Position Sensitive Device) vorgesehen.

Die Erfindung wird im folgenden beispielhaft unter Bezugnahme auf die Zeichnung beschrieben. Es zeigen:
- Fig. 1 und 2: jeweils in schematischen Darstellungen verschiedene Vorrichtungen zur Abstandsbestimmung und zwar jeweils eine Sensoranordnung (Fig. 1a, 2a) und empfangsseitige Intensitätsverteilungen (Fig. 1b, 2b),
- Fig. 3: in schematischer Darstellung eine Sensoranordnung (Fig. 3a) und eine empfangsseitige Intensitätsverteilung (Fig. 3b), und
- Fig. 4: in schematischer Darstellung eine weitere Vorrichtung zur Abstandsmessung, und zwar eine Sensoranordnung (Fig. 4a) und eine empfangsseitige Intensitätsverteilung (Fig. 4b).

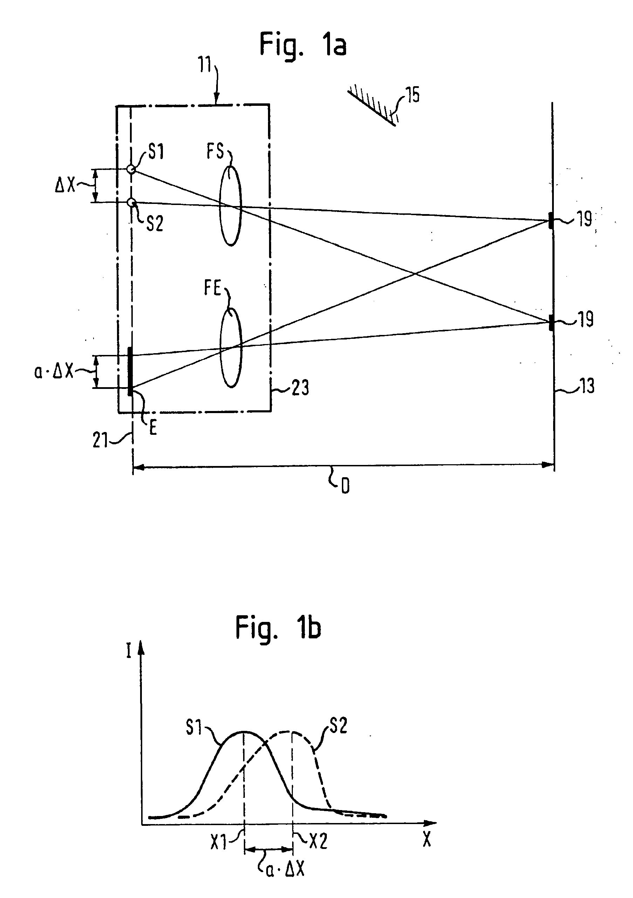

In der Anordnung der Fig. 1a und 1b umfaßt der Sensor 11 zwei räumlich getrennte, in einer Sensorebene 21 um ΔX beabstandete Sendeeinheiten S1 und S2 z.B. in Form einer LED oder einer Laserdiode. Den Sendeeinheiten S1 und S2 ist eine gemeinsame Sendeoptik FS z.B. in Form einer Linse zur Fokussierung der Abtaststrahlen zugeordnet.

Des weiteren weist der Sensor 11 für die beiden Sendeeinheiten S1, S2 eine gemeinsame Empfangseinheit E z.B. in Form eines ein- oder mehrreihigen Fotodioden-Arrays auf, die ebenfalls in der Sensorebene 21 angeordnet ist. Der Empfangseinheit E ist eine z.B. als Linse ausgebildete Empfangsoptik FE zugeordnet. Alternativ könnte die Empfangseinheit E auch außerhalb der Sensorebene 21 angeordnet sein.

Die erwähnten Sensorkomponenten sind in einem gemeinsamen Sensorgehäuse 23 angeordnet, das in Fig. 1a durch eine strichpunktierte Linie angedeutet ist.

Der Sensor 11 dient dazu, den im folgenden als Objektabstand bezeichneten Abstand D zwischen dem Sensor 11 und einem im Meßbereich des Sensors 11 liegenden Tastobjekt 13 zu bestimmen. Als Bezugsebene für die Abstandsbestimmung dient am Sensor 11 z.B. die Sensorebene 21, wie es in Fig. 1a angedeutet ist.

Der Sensor 11 arbeitet nach dem Triangulationsprinzip. Von den Sendeeinheiten S1, S2 ausgesandte Abtaststrahlen werden nach Durchgang durch die Sendeoptik FS vom Tastobjekt 13 reflektiert und/oder remittiert und mittels der Empfangsoptik FE auf der gemeinsamen Empfangseinheit E abgebildet. Jede Sendeeinheit S1, S2 erzeugt auf dem Tastobjekt 13 einen Lichtfleck oder Tastfleck 19, der auf der Empfangseinheit E abgebildet wird und dessen Position auf der Empfangseinheit E vom Objektabstand D abhängig ist.

Wenn keine Störquellen vorhanden sind, dann kann bereits aus der Position eines Tastflecks auf der Empfangseinheit E der Objektabstand D bestimmt werden.

Das Vorsehen von zwei separaten, gemeinsam betriebenen Kanälen, d.h. einem Meßkanal S1-E und einem Zusatzkanal S2-E, gestattet eine sichere und zuverlässige Messung des Objektabstands D auch dann, wenn Störquellen vorhanden sind, die von den Sendeeinheiten S1, S2 ausgesandte Strahlung auf die Empfangseinheit E reflektieren und/oder remittieren und so die eigentlichen, vom Tastobjekt 13 stammenden Empfangssignale verfälschen. Bei den Störobjekten kann es sich beispielsweise um Flächen mit hohem Reflexions- und/oder Remissionsvermögen, insbesondere spiegelnde Flächen, neben oder hinter dem Tastobjekt 13 handeln. In Fig. 1a ist ein derartiges spiegelndes Störobjekt 15 schematisch dargestellt, das sich außerhalb der Sendeachse befindet.

Der Einfluß des Störobjekts 15 sowie die verwendete Vorgehensweise, um das Störsignal von den Nutzsignalen zu trennen, sind in Fig. 1b angedeutet.

Fig. 1b zeigt die Verteilung der Intensität I der auf die Empfangseinheit E insgesamt reflektierten und/oder remittierten Strahlung von Nutzsignalen in einer Richtung X. Die Intensitätsverteilung der Sendeeinheit S1 ist mit einer durchgezogenen, diejenige der Sendeeinheit S2 mit einer gestrichelten Linie angedeutet. Jede Intensitätsverteilung weist zwei charakteristische Bereiche auf, nämlich ein dargestelltes Nutzsignal mit einem Schwerpunkt bei X1 bzw. X2, das dem vom Tastobjekt 13 reflektierten und/oder remittierten Tastfleck 19 entspricht, sowie ein nicht dargestelltes Störsignal. Die Störsignale weisen auf der Empfangseinheit E einen bezogen auf beide Sendeeinheiten S1 und S2 ortsgleichen Schwerpunkt auf.

Ein Maß für den korrekten Objektabstand D bilden lediglich die Positionen X1 und X2. Die Auswertung der Position des Schwerpunkts der Störsignale würde zu einem falschen Objektabstand führen. Wenn lediglich ein einziger Meßkanal vorhanden sein und somit nur ein einziger Intensitätsverlauf zur Verfügung stehen würde, dann bestünde ohne Zusatzinformationen die Gefahr, daß der Sensor 11 das Störsignal als Nutzsignal wertet und durch die Auswertung der Position des Schwerpunkts der Störsignale einen falschen Abstandswert liefert.

Durch das Vorsehen eines Zusatzkanals, der in dem vorliegenden Ausführungsbeispiel durch Vorsehen einer zusätzlichen Sendeeinheit S2 realisiert wird, kann jedoch das Störsignal als solches identifiziert werden. Ausgenutzt wird hierzu der Umstand, daß der Abstand a · ΔX der beiden Empfangssignale auf der Empfangseinheit E proportional zum Abstand ΔX der beiden Sendeeinheiten S1, S2 in der entsprechenden Richtung ist. Der Proportionalitätsfaktor a ist von den Abbildungseigenschaften der Sendeoptik FS und der Empfangsoptik FE abhängig, d.h. es gilt a = f (FS, FE). Diese Beziehung gilt für alle Objektabstände D, d.h. der Zusammenhang zwischen ΔX einerseits und a · ΔX andererseits ist unabhängig vom Objektabstand D.

Bei der gemeinsamen Auswertung der Empfangssignale des Meßkanals S1-E und des Zusatzkanals S2-E werden charakteristische Bereiche der Intensitätsverläufe in Form von Peaks, die einem vom Tastobjekt 13 reflektierten und/oder remittierten Tastfleck entsprechen könnten, daraufhin untersucht, ob sie um das erwartete Maß a · ΔX gegeneinander verschoben sind. Ist dies nicht der Fall, dann scheiden diese charakteristischen Bereiche bei der Abstandsbestimmung aus, und es erfolgt entweder eine Fehlermeldung oder es werden weitere charakteristische Bereiche der Intensitätsverteilungen überprüft.

Wird dagegen festgestellt, daß zwei Peaks der Intensitätsverteilungen um das erwartete Maß a · ΔX gegeneinander verschoben sind, dann wird wenigstens einer dieser Peaks zur Bestimmung des Objektabstands D herangezogen, wobei die Lage von dessen Schwerpunkt X1 bzw. X2 ein Maß für den Objektabstand D darstellt.

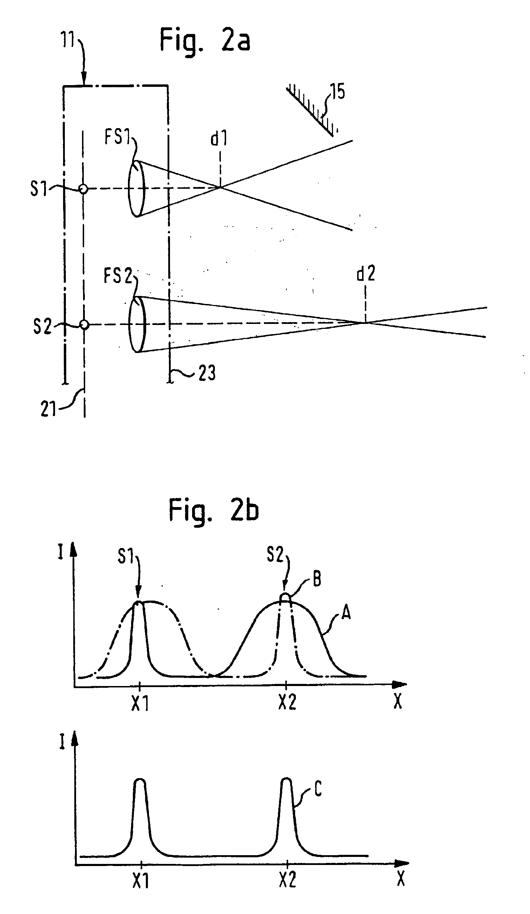

In der in Fig. 2a und 2b veranschaulichten Anordnung ist der Sensor 11 wiederum mit zwei separaten Sendeeinheiten S1 und S2 versehen, denen eine gemeinsame, nicht dargestellte Empfangseinheit zugeordnet ist. Hier ist jeder Sendeeinheit S1, S2 eine eigene Sendeoptik FS1, FS2 z.B. in Form einer Linse zugeordnet.

Die Sendeoptiken FS1 und FS2 unterscheiden sich dadurch, daß sie die von den Sendeeinheiten S1 und S2 ausgesandten Abtaststrahlen auf unterschiedliche Entfernungen d1 bzw. d2 fokussieren. In Abhängigkeit von dem zu ermittelnden Abstand eines in Fig. 2a nicht dargestellten Tastobjekts vom Sensor 11 wird somit der Tastfleck der einen Sendeeinheit S1 schärfer oder weniger scharf auf der Empfangseinheit abgebildet als der Tastfleck der anderen Sendeeinheit S2.

Die erwartete Intensitätsverteilung der Nutzsignale entspricht prinzipiell den Verteilungen A, B, die in der oberen Darstellung der Fig. 2b schematisch gezeigt sind. Befindet sich das Tastobjekt relativ nahe am Sensor 11, so wird der Tastfleck der einen Sendeeinheit auf dem Empfänger schärfer abgebildet als derjenige der anderen Sendeeinheit, wobei der Unterschied in der Schärfe durch die unterschiedlichen Breiten der einander entsprechenden charakteristischen Bereiche oder Peaks der jeweiligen Intensitätsverteilung A oder B detektiert werden kann. Bei einem relativ weit vom Sensor 11 entfernten Tastobjekt ist es umgekehrt, d.h. es wird der andere Tastfleck schärfer abgebildet.

Fällt Störstrahlung, z.B. aufgrund eines spiegelnden Störobjekts 15 (vgl. Fig. 2a), auf die Empfangseinheit, so ergibt sich beispielsweise die in der unteren Darstellung von Fig. 2b schematisch gezeigte Intensitätsverteilung C. Das Störsignal des Störobjekts 15 kann also zur Folge haben, daß nicht mehr aufgrund eines einem erwarteten Maß entsprechenden Unterschieds in der Schärfe der abgebildeten Tastflecken davon ausgegangen werden kann, daß die Peaks zur Bestimmung des korrekten Objektabstands herangezogen werden können.

Durch den Nachweis eines nicht den erwarteten Intensitätsverlauf aufweisenden Empfangssignals kann also das Vorhandensein eines die Messung verfälschenden Störobjekts 15 erkannt werden.

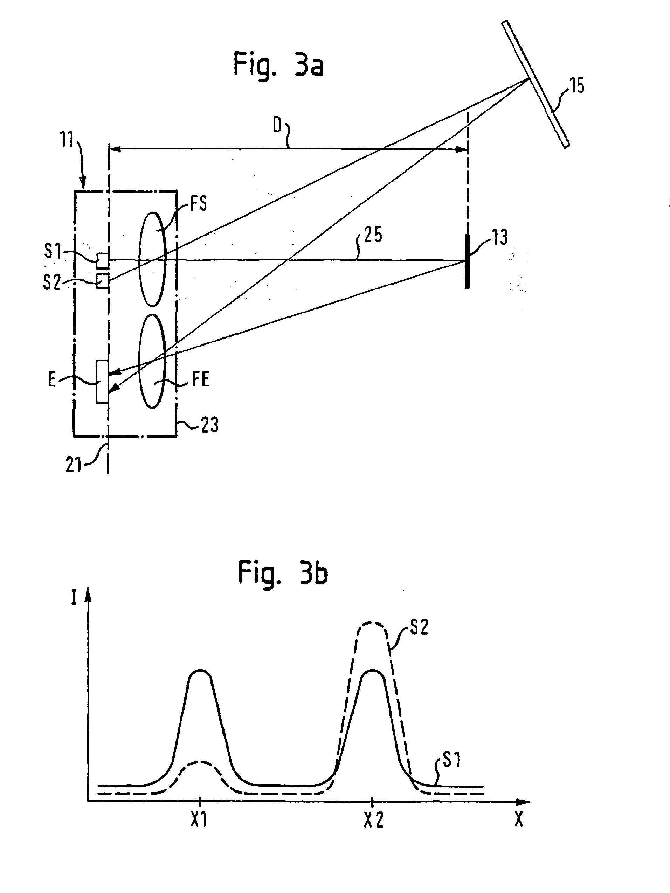

Ein Ausführungsbeispiel der Erfindung gemäß Fig. 3a und 3b zeigt eine Möglichkeit, einen Zusatzkanal zu nutzen, um den die Messung des Objektabstands D verfälschenden Einfluß eines Störobjekts 15 unschädlich zu machen.

Der Sensor 11 umfaßt zwei Sendeeinheiten S1 und S2 sowie eine gemeinsame Empfangseinheit E. Es sind eine gemeinsame Sendeoptik FS für die beiden Sendeeinheiten S1, S2 in Form einer Linse sowie für die Empfangseinheit E eine Empfangsoptik FE vorgesehen, die ebenfalls als Linse ausgebildet ist.

Während im von der Sendeeinheit S1 und der Empfangseinheit E gebildeten Meßkanal S1-E die ausgesandten Abtaststrahlen 25 fokussiert werden, um auf dem Tastobjekt 13 einen Tastfleck zu erzeugen, wird im Zusatzkanal S2-E dafür gesorgt, daß eine im Vergleich zu den Abtaststrahlen 25 des Meßkanals S1-E räumlich wesentlich weiter ausgedehnte Abtastzone in den tastobjektseitigen Halbraum des Sensors 11 ausgesandt wird. Die Abtastzone kann durch gezielte Nicht-Fokussierung, Streuung, Aufweitung und/oder diffuse Aussendung der Abtaststrahlen der Sendeeinheit S2 erzeugt werden.

Mit der Abtastzone wird gezielt Störstrahlung nachgebildet, die beispielsweise durch Streuung in der Sendeeinheit S2, durch Reflexionen und/oder Remissionen an optischen Elementen wie z.B. Blenden oder Tuben sowie durch Defekte der Sendeoptik FS, z.B. Kratzer, Staub oder Schlieren an einer Sendelinse, hervorgerufen und von einem Störobjekt 15 auf die Empfangseinheit E reflektiert und/oder remittiert wird.

Fig. 3b zeigt die Intensitätsverteilungen der von den beiden Sendeeinheiten S1, S2 stammenden Empfangssignale. Es ist ein Fall dargestellt, bei dem aufgrund der vorstehend erwähnten Fehlerquellen auch im Meßkanal S1-E ausgesandte Strahlung auf das Störobjekt 15 trifft und von diesem auf die Empfangseinheit E reflektiert und/oder remittiert wird, wodurch an der Position X2 ein Intensitätspeak erzeugt wird. Der entsprechende Intensitätspeak der Sendeeinheit S2 des Zusatzkanals ist aufgrund der gezielten Nachbildung der Störstrahlung höher als derjenige des Meßkanals, in welchem mit fokussierten Abtaststrahlen 25 gearbeitet wird. An der Position X1 dagegen, die dem zu ermittelnden Objektabstand D entspricht, entsteht im Meßkanal S1-E ein höheres Empfangssignal als im Zusatzkanal S2-E, da die Intensitätsdichte der Abtastzone am Tastobjekt 13 geringer ist als diejenige der Abtaststrahlen 25, mit denen auf dem Tastobjekt 13 ein Tastfleck erzeugt wird.

Die gemeinsame Auswertung der Empfangssignale der beiden Kanäle erfolgt dadurch, daß das Empfangssignal S2 des Zusatzkanals vom Empfangssignal S1 des Meßkanals abgezogen wird und negative Differenzwerte gleich Null gesetzt werden. Übrig bleibt dann ein positives Differenzsignal an der dem Objektabstand D entsprechenden Position X1 auf der Empfangseinheit E. Dieses resultierende positive Differenzsignal wird dann für die Bestimmung des Objektabstands D verwendet.

In dem dargestellten Ausführungsbeispiel sind die Sendeeinheiten S1, S2 und die Empfangseinheit E in der gemeinsamen Sensorebene 21 arigeordnet, wobei sich die Sendeeinheit S2 des Zusatzkanals, mittels welcher die räumlich ausgedehnte Abtastzone erzeugt wird, zwischen der Sendeeinheit S1 des Meßkanals und der Empfangseinheit E befindet. Die Abbildung der von den beiden Sendeeinheiten S1, S2 ausgesandten Strahlen erfolgt durch die gemeinsame Sendeoptik FS. Die Intensitäten im Meßkanal und im Zusatzkanal werden derart gewählt, daß an der dem Störobjekt 15 entsprechenden Position X2 auf der Empfangseinheit E der Zusatzkanal ein höheres Signal liefert als der Meßkanal, wie es in Fig. 3b gezeigt ist, damit bei der Auswertung im Anschluß an die Bildung der Differenz zwischen den beiden Empfangssignalen lediglich an der dem Objektabstand D entsprechenden Position X1 ein positives Signal übrig bleibt.

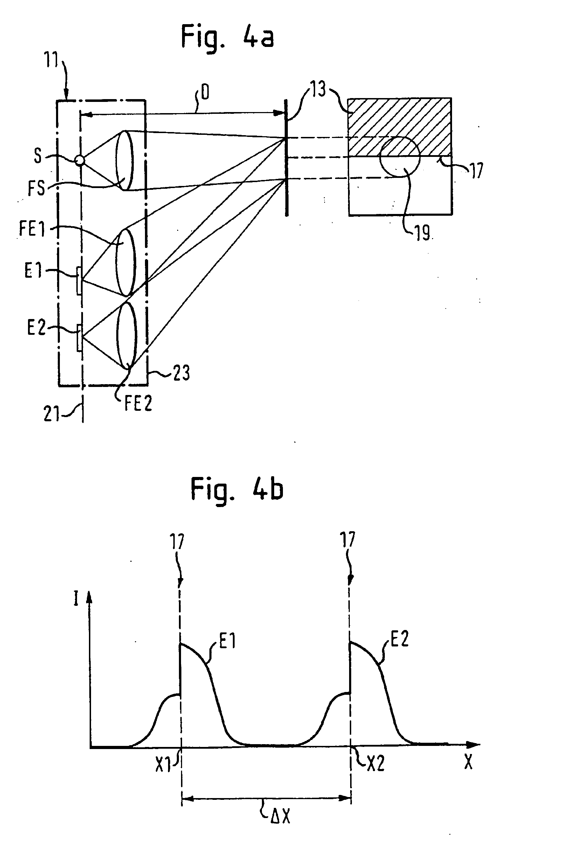

Die Fig. 4a und 4b zeigen eine Anordnung, die insbesondere dazu geeignet ist, den störenden Einfluß von sogenannten Kontrastkanten 17 auf dem Tastobjekt 13 unschädlich zu machen. Kontrastkanten können beispielsweise Übergänge zwischen dunklen und hellen Flächen in Schriftzügen auf dem Tastobjekt 13 sein. In der schematischen Darstellung der Fig. 4a ist ein Bereich mit geringem Reflexions- und/oder Remissionsvermögen schraffiert dargestellt. Der vom Sensor 11 ausgesandte Tastfleck 19 bedeckt gleichzeitig einen Bereich mit hohem und einen Bereich mit niedrigem Reflexions- und/oder Remissionsvermögen.

Die empfangsseitige Auswirkung der Kontrastkante 17 ist in der die Empfangssignale auf den beiden Empfangseinheiten E1, E2 andeutenden Fig. 4b gezeigt. In dem die Tastobjektfläche mit geringem Reflexions- und/oder Remissionsvermögen entsprechenden Bereich ist das Empfangssignal niedriger.

Wäre lediglich eine Empfangseinheit und somit lediglich ein Empfangssignal vorhanden, so würde bei der Bildung des Schwerpunkts der Intensitätsverteilung, um die zur Bestimmung des Objektabstands D benötigte X-Position auf der Empfangseinheit zu ermitteln, eine Verfälschung auftreten, da diese X-Position in Richtung des ein hohes Reflexions- und/oder Remissionsvermögen aufweisenden Bereiches verschoben wäre.

Indem mittels einer weiteren Empfangseinheit E2 ein Zusatzkanal geschaffen wird, der ein zusätzliches Empfangssignal liefert, in welchem sich die Kontrastkante 17 ebenfalls auswirkt, sind zwei Empfangssignale vorhanden, die jeweils einen von der Kontrastkante 17 herrührenden charakteristischen Bereich aufweisen, in dem sich die Intensität sprunghaft ändert.

Bei der Auswertung der Intensitätsverteilungen können diese charakteristischen Bereiche problemlos identifiziert und entsprechenden Positionen X1, X2 auf den Empfangseinheiten E1, E2 zugeordnet werden. Unabhängig von dem konkreten Verlauf der Intensitätsverteilungen der Empfangssignale bildet der Abstand ΔX der Positionen X1, X2 der charakteristischen Bereiche ein Maß für den zu ermittelnden Objektabstand D.

### Bezugszeichenliste

- 11: Sensor
- 13: Tastobjekt
- 15: Störobjekt
- 17: Kontrastkante
- 19: Tastfleck
- 21: Sensorebene
- 23: Sensorgehäuse
- 25: Abtaststrahlen

- D: Objektabstand
- S, S1, S2: Sendeeinheit
- E, E1, E2: Empfangseinheit
- FS, FS1, FS2: Sendeoptik
- FE, FE1, FE2: Empfangsoptik

## Patentansprüche

1. Verfahren zum Bestimmen des Objektabstandes (D) zwischen einem nach dem Triangulationsprinzip arbeitenden optoelektronischen Sensor (11) und einem Tastobjekt (13),
- wobei der Sensor (11) wenigstens einen Messkanal zwischen einer Sendeeinheit (S1; S) zum Aussenden elektromagnetischer Abtaststrahlen in den Messbereich und einer Empfangseinheit (E; E1) zum Nachweisen von aus dem Messbereich reflektierten und/oder remittierten Abtaststrahlen aufweist;
- wobei der Sensor (11) zumindest einen Zusatzkanal aufweist, der eine weitere Sendeeinheit (S2) aufweist, und
- wobei zur Bestimmung des Objektabstandes die Empfangssignale des Messkanals und des Zusatzkanals gemeinsam ausgewertet werden,
- wobei die Abtaststrahlen des Zusatzkanals gezielt derart und insbesondere unfokussiert, gestreut, aufgeweitet und/oder diffus ausgesandt werden, dass eine räumlich ausgedehnte Abtastzone in den Messbereich ausgesandt wird,
- wobei die Abtaststrahlen des Messkanals fokussiert werden, und wobei die Abtastzone zumindest im Wesentlichen den gesamten Halbraum umfasst.

2. Verfahren nach Anspruch 1
**dadurch gekennzeichnet,**
**dass** bei der gemeinsamen Auswertung eine Differenz zwischen den Empfangssignalen des Messkanals und des Zusatzkanals gebildet wird, wobei insbesondere das Empfangssignal des Zusatzkanals vom Empfangssignal des Messkanals abgezogen wird, negative Differenzwerte gleich Null gesetzt werden und ein resultierendes positives Differenzsignal für die Abstandsbestimmung verwendet wird.

3. Verfahren nach einem der Ansprüche 1 oder 2
**dadurch gekennzeichnet,**
**dass** die Intensität der Abtaststrahlen derart gewählt wird, dass das Empfangssignal in einem charakteristischen Bereich, der von einem Störobjekt (15) mit im Vergleich zum Tastobjekt (13) hohem Reflexions- und/oder Remissionsvermögen hervorgerufen wird, im Zusatzkanal größer ist als im Messkanal.

4. Verfahren nach einem der vorhergehenden Ansprüche,
**dadurch gekennzeichnet,**
**dass** für den Messkanal und den Zusatzkanal eine gemeinsame Empfangseinheit (E) verwendet wird.

5. Verfahren nach einem der vorhergehenden Ansprüche,
**dadurch gekennzeichnet,**
**dass** der Messkanal und der Zusatzkanal für jeden Objektabstand (D) gemeinsam und insbesondere zumindest im Wesentlichen gleichzeitig betrieben werden.

6. Verfahren nach einem der vorhergehenden Ansprüche,
**dadurch gekennzeichnet,**
**dass** die Empfangssignale sowohl des Messkanals als auch des Zusatzkanals zur Bestimmung eines als Maß für den Objektabstand (D) dienenden Abstandswertes verwendet werden.

7. Vorrichtung zum Bestimmen des Objektabstands (D) zwischen einem nach dem Triangulationsprinzip arbeitenden optoelektronischen Sensor (11) und einem Tastobjekt (13),
- mit wenigstens einem Messkanal zwischen einer Sendeeinheit (S1; S) zum Aussenden elektromagnetischer Abtaststrahlen in den Messbereich und einer Empfangseinheit (E; E1) zum Nachweisen von aus dem Messbereich reflektierten und/ oder remittierten Abtaststrahlen,
- mit zumindest einem Zusatzkanal, der eine weitere Sendeeinheit (S2) aufweist, und
- mit einer Auswerteeinheit zur gemeinsamen Auswertung der Empfangssignale des Messkanals und des Zusatzkanals zur Bestimmung des Objektabstands (D),
- wobei der Zusatzkanal derart ausgebildet ist, dass die Abtaststrahlen des Zusatzkanals gezielt derart ausssendbar sind, dass eine räumlich ausgedehnte Abtastzone in den Messbereich aussendbar ist,
- wobei der Messkanal derart ausgebildet ist, dass die Abtaststrahlen des Messkanals fokussierbar sind, und wobei die Abtastzone zumindest im Wesentlichen den gesamten Halbraum umfasst.

8. Vorrichtung nach Anspruch 7
**dadurch gekennzeichnet,**
**dass** alle Sende- und Empfangseinheiten (S, S1, S2, E, E1, E2) in einer gemeinsamen Sensorebene (21) angeordnet sind, die bevorzugt senkrecht zu der dem kürzesten Abstand zwischen dem Sensor (11) und dem Tastobjekt (13) entsprechenden Abstandsrichtung verläuft.

9. Vorrichtung nach einem der Ansprüche 7 oder 8,
**dadurch gekennzeichnet,**
**dass** wenigstens eine der Sendeeinheiten (S, S1, S2) in Form einer LED oder einer Lasereinrichtung vorgesehen ist, und/oder dass die oder jede Empfangseinheit (E, E1, E2) in Form eines ortsauflösenden Detektors, insbesondere eines ein- oder mehrreihigen Fotodioden-Arrays, einer CCD (Charge Coupled Device) oder einer PSD (Position Sensitive Device) vorgesehen ist.

10. Vorrichtung nach einem der Ansprüchen 7 bis 9,
**dadurch gekennzeichnet,**
**dass** alle Sende- und Empfangseinheiten (S, S1, S2, E, E1, E2) in einem gemeinsamen Sensorgehäuse (23) angeordnet sind.

## Claims

1. A method for the determination of the object distance (D) between an opto-electronic sensor (11) working according to the principle of triangulation and a sensed object (13),
- wherein the sensor (11) has at least one measuring channel between a transmission unit (S1; S) for the transmission of electromagnetic sensing rays into the measuring region and a reception unit (E; E1) for the detection of sensing rays reflected and/or remitted from the measuring region;
- wherein the sensor (11) has at least one additional channel which has a further transmission unit (S2);
- wherein the received signals of the measuring channel and of the additional channel are jointly evaluated in order to determine the object distance;
- wherein the sensing rays of the additional channel are deliberately transmitted, in particular in an unfocused, scattered, expanded and/or diffuse manner, such that a spatially expanded sensing zone is transmitted into the measuring region;
- wherein the sensing rays of the measuring channel are focused; and
- wherein the sensing zone at least substantially includes the total half-space.

2. A method in accordance with claim 1, **characterized in that** a difference is formed between the received signals of the measuring channel and of the additional channel on the joint evaluation, with in particular the received signal of the additional channel being deducted from the received signal of the measuring channel, negative difference values being set to zero and a resulting positive difference signal being used for the determination of the distance.

3. A method in accordance with claim 1 or claim 2, **characterized in that** the intensity of the sensing rays is selected such that the received signal is larger in the additional channel than in the measuring channel in a characteristic region which is caused by an interfering object (15) with a high reflection and/or remittance capability in comparison with the sensed object (13).

4. A method in accordance with any one of the preceding claims, **characterized in that** a common receiver unit (E) is used for the measuring channel and for the additional channel.

5. A method in accordance with any one of the preceding claims, **characterized in that** the measuring channel and the additional channel are operated jointly, and in particular at least substantially simultaneously, for each object distance (D).

6. A method in accordance with any one of the preceding claims, **characterized in that** the received signals of both the measuring channel and of the additional channel are used to determine a distance value serving as the measure for the object distance (D).

7. An apparatus for the determination of the object distance (D) between an opto-electronic sensor (11) working according to the principle of triangulation and a sensed object (13),
- having at least one measuring channel between a transmission unit (S1; S) for the transmission of electromagnetic sensing rays into the measuring region and a reception unit (E; E1) for the detection of sensing rays reflected and/or remitted from the measuring region;
- having at least one additional channel which has a further transmission unit (S2); and
- having an evaluation unit for the joint evaluation of the received signals of the measuring channel and of the additional channel in order to determine the object distance (D),
- wherein the additional channel is configured such that the sensing rays of the additional channel can be transmitted directly such that a spatially extended sensing zone can be transmitted into the measuring region;
- wherein the measuring channel is configured such that the sensing rays of the measuring channel can be focused; and
- wherein the sensing zone includes at least substantially the total half-space.

8. An apparatus in accordance with claim 7, **characterized in that** all transmission units and reception units (S, S1, S2, E, E1, E2) are arranged in a common sensor plane (21) which preferably extends perpendicular to the distance direction corresponding to the shortest distance between the sensor (11) and the sensed object (13).

9. An apparatus in accordance with claim 7 or claim 8, **characterized in that** at least one of the transmission units (S, S1, S2) is provided in the form of an LED or a laser device; and/or **in that** the or each reception unit (E, E1, E2) is provided in the form of a spatially resolving detector, in particular of a single row or multi-row photodiode array, of a CCD (charge coupled device) or of a PSD (position sensitive device).

10. An apparatus in accordance with any one of the claims 7 to 9, **characterized in that** all transmission units and reception units (S, S1, S2, E, E1, E2) are arranged in a common sensor housing (23).

## Revendications

1. Procédé pour déterminer la distance objet (D) entre un capteur optoélectronique (11) fonctionnant selon le principe de triangulation et un objet cible (13),
- dans lequel le capteur (11) comprend au moins un canal de mesure entre une unité émettrice (S1 ; S) pour émettre des rayons de palpage électromagnétiques dans la plage de mesure et une unité réceptrice (E ; E1) pour mettre en évidence des rayons de palpage réfléchis et/ou réémis depuis la plage de mesure ;
- dans lequel le capteur (11) comprend au moins un canal supplémentaire qui comporte une autre unité émettrice (S2),
- dans lequel, pour déterminer la distance objet, les signaux reçus du canal de mesure et du canal supplémentaire sont exploités en commun,
- dans lequel les rayons de palpage du canal supplémentaire sont émis de façon ciblée de telle manière, et en particulier en étant défocalisés, diffractés, étalés et/ou diffusés, que l'on émet dans la plage de mesure une zone de palpage étendue dans l'espace,
-- dans lequel les rayons de palpage du canal de mesure sont focalisés, et dans lequel
-- la zone de palpage comprend au moins sensiblement la totalité du demi-espace.

2. Procédé selon la revendication 1,
**caractérisé en ce que** lors de l'exploitation commune, on forme une différence entre les signaux reçus du canal de mesure et du canal supplémentaire, le signal reçu du canal supplémentaire étant en particulier soustrait du signal reçu du canal de mesure, des valeurs de différence négatives sont mises à zéro, et un signal de différence positif résultant est utilisé pour la détermination de distance.

3. Procédé selon l'une des revendications 1 ou 2,
**caractérisé en ce que** l'intensité des rayons de palpage est choisie de telle façon que le signal reçu dans une plage caractéristique, qui est provoqué par un objet perturbateur (15) avec, par comparaison à l'objet cible (13), une capacité de réflexion et/ou de réémission élevée, dans le canal supplémentaire est supérieur à celui dans le canal de mesure.

4. Procédé selon l'une des revendications précédentes,
**caractérisé en ce que** l'on utilise pour le canal de mesure et pour le canal supplémentaire une unité réceptrice commune (E).

5. Procédé selon l'une des revendications précédentes,
**caractérisé en ce que** le canal de mesure et le canal supplémentaire pour chaque distance objet (D) sont utilisés conjointement et en particulier au moins essentiellement simultanément.

6. Procédé selon l'une des revendications précédentes,
**caractérisé en ce que** les signaux reçus du canal de mesure tout comme ceux du canal supplémentaire sont utilisés pour la détermination d'une valeur de distance servant de mesure pour la distance objet (D).

7. Dispositif pour déterminer la distance objet (D) entre un capteur optoélectronique fonctionnant selon le principe de triangulation et un objet cible (13),
- comprenant au moins un canal de mesure entre une unité émettrice (S1 ; S) pour émettre des rayons de palpage électromagnétiques dans la plage de mesure et une unité réceptrice (E ; E1) pour mettre en évidence des rayons de palpage réfléchis et/ou réémis depuis la plage de mesure,
- comprenant au moins un canal supplémentaire qui comporte une autre unité émettrice (S 2), et
- comprenant une unité d'évaluation pour l'évaluation commune des signaux reçus du canal de mesure et du canal supplémentaire pour déterminer la distance objet (D),
- dans lequel le canal supplémentaire est réalisé de telle façon que les rayons de palpage du canal supplémentaire peuvent être émis de façon ciblée de telle façon qu'il est possible d'émettre dans la plage de mesure une zone de palpage étendue dans l'espace,
- le canal de mesure étant réalisé de telle façon que les rayons de palpage du canal de mesure peuvent être focalisés, et dans lequel
- la zone de palpage comprend au moins essentiellement la totalité du demi-espace.

8. Dispositif selon la revendication 7,
**caractérisé en ce que** toutes les unités émettrices et réceptrices (S, S1, S2, E, E1, E2) sont agencées dans un plan de capteur commun (21) qui est de préférence perpendiculaire à la direction d'espacement qui correspond à la plus courte distance entre le capteur (11) et l'objet cible (13).

9. Dispositif selon l'une des revendications 7 ou 8,
**caractérisé en ce que** l'une au moins des unités émettrices (S, S1, S2) est prévue sous la forme d'une diode électroluminescente ou d'un composant à laser, et/ou **en ce que** l'unité réceptrice ou chaque unité réceptrice (E, E1, E2) est prévue sous la forme d'un détecteur à résolution locale, en particulier d'un réseau de photodiodes à une ou plusieurs rangées, d'un dispositif CCD (Charge Coupled Device), ou d'un dispositif PSD (Position Sensitive Device).

10. Dispositif selon l'une des revendications 7 à 9,
**caractérisé en ce que** toutes les unités émettrices et réceptrices (S, S1, S2, E, E1, E2) sont agencées dans un boîtier de capteur commun (23).
